# EUROPEAN PATENT APPLICATION

(11) **EP 4 574 751 A1**
(43) Date of publication of application: **25.06.2025**
(21) Application number: 23219360.7
(22) Date of filing: 21.12.2023
(51) Int. Cl.: C01B 3/04

(54) **PROCESS FOR PRODUCING CRACKED GAS PRODUCT COMPRISING HYDROGEN**

(71) Applicant: L'AIR LIQUIDE, SOCIETE ANONYME POUR L'ETUDE ET L'EXPLOITATION DES PROCEDES GEORGES CLAUDE, 75007 Paris (FR)
(72) Inventor: Kot, Krzysztof, 31-545 Krakow (PL); Shrivastava, Swatantra Kumar, 60439 Frankfurt am Main (DE)
(74) Representative: Air Liquide

(57) **Abstract**

A process for producing a cracked gas product comprising hydrogen from an endothermic cracking reaction of an ammonia feedstock stream, said process comprising the following steps:
- Recovering heat from said cracked gas product flowing in a cracked gas conduit (23) in a heat recovery step,
- Redirecting the recovered heat to at least one secondary reactor in a heat redirection step, the secondary reactor comprising a gas reaction section in which a secondary catalytic endothermic conversion of the ammonia feedstock stream into the partially converted ammonia stream is performed,
- Transferring the redirected heat to the secondary catalytic endothermic conversion through a thermal conductive layer at least partly delimiting the gas reaction section, in a heat transfer step
the process comprising :
- Performing a heat exchanges step by performing heat exchanges between the cracked gas product and the main catalytic endothermic conversion.

## Description

The invention relates to an apparatus for producing a cracked gas product comprising hydrogen by an endothermic reaction of an ammonia feedstock stream. The invention also relates to a process for producing a cracked gas product comprising hydrogen.

The production of a cracked gas product comprising hydrogen by an endothermic cracking reaction of an ammonia feedstock stream can be done in a catalytic unit at elevated temperatures, generally from 400°C to 800°C. Such a unit typically comprises a metallic shell, a catalyst and an external heat source. To achieve a lowest possible CO2 footprint for the cracking process, the external heat source is provided only by a combustion of an ammonia fuel stream in a furnace. The heat is transferred to a catalyst which promotes the cracking reaction, said catalyst requiring a high quantity of heat and energy for promoting the cracking reaction. If the temperature is too low for the catalyst to promote the cracking reaction, the ammonia conversion rate is significantly decreased. Low conversion results in the need of larger process duty in the catalytic unit and as a consequence increased waste heat in an effluent of the endothermic cracking reaction, which in turn increases the co-product steam production and export. Co-product steam production can be a consequence of cooling said effluent, for example a hot cracked gas, from the cracking reaction involving elevated temperatures.

The invention proposes a process and apparatus for producing a cracked gas product comprising hydrogen from an endothermic cracking reaction of an ammonia feedstock stream in which the required external energy is significantly reduced and the conversion rate of the cracking reaction is significantly improved.

The invention proposes a process for producing a cracked gas product comprising hydrogen from an endothermic cracking reaction of an ammonia feedstock stream, said process comprising the following steps:
- Providing an ammonia feedstock stream,
- Heating a main reactor in a heating step,
- In the heated main reactor, converting a partially converted ammonia stream into the cracked gas product by a main catalytic endothermic conversion of said partially converted ammonia stream,
- Recovering heat from said cracked gas product flowing in a cracked gas conduit in a heat recovery step,
- Redirecting the heat recovered in said heat recovery step to at least one secondary reactor in a heat redirection step, the secondary reactor comprising a gas reaction section in which a secondary catalytic endothermic conversion of the ammonia feedstock stream into the partially converted ammonia stream is performed,
   - Transferring the redirected heat to the secondary catalytic endothermic conversion through a thermal conductive layer at least partly delimiting the gas reaction section, in a heat transfer step,
   the process comprising :
   - Performing a heat exchanges step by performing heat exchanges between the cracked gas product and the main catalytic endothermic conversion, said heat exchanges step comprising the following steps:
   - discharging the cracked gas product in said cracked gas conduit, said cracked gas conduit being arranged for the heat exchanges between the discharged cracked gas product and the main catalytic endothermic conversion,
   - recovering heat from the discharged cracked gas product,
   - directing the recovered heat to the main catalytic endothermic conversion.

In this disclosure, the main catalytic endothermic conversion can also be called main catalytic conversion, and the secondary catalytic endothermic conversion may also be called secondary catalytic conversion.

Said cracked gas conduit being arranged in heat exchange communication with both the main catalytic conversion and the secondary catalytic conversion allows for a particularly efficient heat integration recovering waste heat from the cracked gas. In this configuration, the cracked gas waste heat can in particular be recovered nearly after the cracked gas leaves the main catalytic conversion and directed to the main catalytic conversion to promote said main catalytic conversion directly. The remaining waste heat in the cracked gas can then be valorized in promoting the secondary catalytic conversion. Zero steam export from the process can be achieved.

In one embodiment, the heat exchanges step is performed upstream of the heat recovery step on the cracked gas conduit.

According to one aspect of the invention, the main catalytic conversion is performed in a reaction chamber.

In one aspect of the invention, the main catalytic endothermic conversion is a main cracking reaction of the partially converted ammonia stream.

In one aspect of the invention, the main and the secondary catalytic conversion are performed sequentially in the ammonia feedstock stream flow direction.

In one aspect of the invention, the secondary catalytic conversion is upstream the main catalytic conversion in the ammonia feedstock stream flow direction, the ammonia feedstock stream being converted by the secondary catalytic endothermic conversion into the partially converted ammonia stream, and the partially converted ammonia stream is converted by the main catalytic endothermic conversion into the cracked gas product.

In one aspect of the invention, the partially converted ammonia stream is a pre-cracked ammonia feedstock stream.

In one aspect of the invention, the secondary catalytic conversion is a pre-cracking reaction of the ammonia feedstock stream.

The cracked gas product comprises hydrogen, nitrogen and potentially an unconverted portion of ammonia.

In one embodiment, the process comprises a step of recovering hydrogen from said cracked gas product, for example recovering hydrogen from said cracked gas product by adsorption, in particular by pressure swing adsorption.

In one aspect of the invention, the secondary catalytic conversion is performed with a conversion rate similar to a conversion rate of the main catalytic conversion, preferably the secondary catalytic conversion rate is lower than the main catalytic conversion rate.

In one aspect of the invention, the secondary catalytic conversion rate is comprised between 15% and 90%, preferably between 15% and 50%, preferably between 15% and 20%.

In one aspect of the invention, the secondary catalytic conversion is realized at a lower temperature than the main catalytic conversion.

In one aspect of the invention, the secondary catalytic conversion is performed at a temperature comprised between 350°C and 650°C, preferably around 550°C and the main catalytic conversion is performed at a temperature comprised between 600°C and 900°C, preferably between 700°C and 800°C, for example at a pressure of around 30barA. The lower temperature of the secondary catalytic conversion allows to use a different catalyst than the catalyst of the main catalytic conversion, said catalyst needing a lower temperature for acting, and thus to improve the total conversion rate of the cracking reaction.

In one aspect of the invention, the main catalytic conversion is performed in the main reactor in presence of a catalyst layer and the secondary catalytic conversion is performed in the secondary reactor in presence of a secondary catalyst.

In another aspect of the invention, the secondary catalyst has a composition different from the catalyst layer.

In one aspect of the invention, the main catalytic conversion and the secondary catalytic conversion are performed over separate catalysts beds.

According to one aspect of the invention, the catalyst layer comprising nickel as a catalytically active material, in particular as a catalytically active material on a carrier, for example an aluminum oxide (Al2O3) carrier.

According to one aspect of the invention, the catalyst layer comprises from 5 to 20 wt% of nickel, preferably around 15wt% of nickel.

According to one aspect of the invention, the secondary catalyst comprises nickel as a catalytically active material, in particular as a catalytically active material on a carrier, for example an aluminum oxide (Al2O3) carrier.

According to one aspect of the invention, the secondary catalyst comprises above 20 to above 45 wt% of nickel, preferably above 35 wt% of nickel and/or a precious metal as a catalytically active material, such as ruthenium, preferably above 1,5 wt% of ruthenium.

In one aspect of the invention, the process comprises a pre-heating step of the partially converted ammonia stream upstream of the main catalytic conversion.

In one aspect of the invention, the secondary reactor is a gas-heated reactor.

In one aspect of the invention, the heating step comprises combusting a fuel gas stream in a combustion reaction performed in a firing chamber.

In one aspect of the invention, the heating step comprises heating the main reactor by an electrical heating device.

In one aspect of the invention, the step of discharging the cracked gas product in said cracked gas conduit, comprises discharging the cracked gas product from the reaction chamber in said cracked gas conduit. In particular, the heat recovery step comprises recovering heat from the cracked gas product discharged from the reaction chamber in said cracked gas conduit.

In one aspect of the invention, the heat recovery step and the heat redirection step are performed by convection heat transfer from the cracked gas product to the secondary reactor.

In one aspect of the invention, the convection heat transfer occurs through the fluid movement of the cracked gas product towards and around the thermal conductive layer.

In one aspect of the invention, the heat transfer step is performed by heat conduction from the cracked gas product, through the thermal conductive layer, to the gas reaction section.

In one aspect of the invention, the cracked gas conduit comprises a cracked gas product circulation section arranged in a heat exchange relationship with the gas reaction section, cracked gas product circulation section through which the cracked gas product circulates.

According to one aspect of the invention, the secondary reactor is a single pass reactor. In other words, the ammonia feedstock stream circulates a single time through the gas reaction section. The filling of the secondary reactor with the secondary catalyst is thus facilitated.

According to one aspect of the invention, the ammonia feedstock stream circulates in a single direction in the secondary reactor.

According to one aspect of the invention, co-product steam production during the catalytic conversion is reduced. Preferably, co-product steam export during the catalytic conversion is avoided.

The invention also relates to an apparatus for producing a cracked gas product comprising hydrogen by an endothermic cracking reaction of an ammonia feedstock stream, said apparatus comprising:
- At least one main reactor arranged for producing said cracked gas product by a main endothermic catalytic conversion of a partially converted ammonia stream,
- A cracked gas conduit arranged to discharge said cracked gas product from the main reactor,
- A secondary reactor comprising a gas reaction section, said gas reaction section comprising a secondary catalyst configured to promote a secondary endothermic catalytic conversion of the ammonia feedstock stream into the partially converted ammonia stream, said gas reaction section being at least partially delimited by a thermal conductive layer arranged to recover part of the heat from the cracked gas product in the cracked gas conduit, and provide the recovered heat to the secondary catalyst
- the main reactor comprising:
   - an outer shell tube, comprising a reaction chamber, said reaction chamber being configured to be heated,
   - a catalyst layer arranged in the reaction chamber for performing the main endothermic catalytic conversion,
   - an entry for the partially converted ammonia stream arranged in the reaction chamber, the entry for the ammonia feedstock stream being in fluid connection with the catalyst layer,
   apparatus wherein said cracked gas conduit is arranged in heat exchange relationship with the reaction chamber.

In one aspect of the invention, the apparatus comprises a heating device arranged to provide heat to the main reactor, in particular to provide heat to the reaction chamber.

In one embodiment, a portion of the cracked gas conduit is extending inside the reaction chamber. In particular, the apparatus is configured to, after entry of the partially converted ammonia stream into the reaction chamber, make said partially converted ammonia stream flow through the catalyst layer for a catalytic conversion of said partially converted ammonia stream into said cracked gas product and make said cracked gas product flow through said cracked gas conduit.

In one embodiment, the cracked gas conduit is extending through said catalyst layer.

In one embodiment, the apparatus is configured to make said partially converted ammonia stream flow through the catalyst layer in countercurrent to the flow of the cracked gas product through said portion of the cracked gas conduit extending inside the reaction chamber.

In one embodiment, the cracked gas conduit, in particular said portion of the cracked gas conduit extending inside the reaction chamber, comprises a heat exchange section arranged in a heat exchange relationship with the reaction chamber. In particular, said heat exchange section comprises at least one heat exchange tube arranged for the circulation of the cracked gas product and heat exchanges between the cracked gas product and the reaction chamber. In one embodiment heat exchange tube has a coiled shape.

In one embodiment, said heat exchange section comprises at least two heat exchange tubes arranged for the circulation of the cracked gas product and heat exchanges between the cracked gas product and the reaction chamber. In one embodiment each of said at least two heat exchange tubes has a coiled shape. In particular, said at least two heat exchange tubes having a coiled shape are interlaced.

In one aspect of the invention, the secondary reactor is arranged upstream the main reactor in the ammonia feedstock stream flow direction.

In one aspect of the invention, the apparatus comprises a partially converted ammonia stream conduit arranged to discharge the partially converted ammonia stream from the secondary reactor and feed the main reactor with the discharged partially converted ammonia stream.

In one aspect of the invention, said catalyst layer is configured to promote the main catalytic conversion.

In one aspect of the invention, the main catalyst is configured to allow the main catalytic conversion of the partially converted ammonia stream at a temperature comprised between 600°C and 900°C, preferably between 700°C and 800°C, for example at a pressure of around 30barA.

In particular, the catalyst layer comprises nickel as a catalytically active material, in particular as a catalytically active material on a carrier, for example an aluminum oxide (Al2O3) carrier.

According to one aspect of the invention, the catalyst layer comprises from 5 to 20 wt% of nickel, preferably around 15wt% of nickel.

In one aspect of the invention, the secondary catalyst is configured to allow the secondary catalytic conversion of the ammonia feedstock stream at a temperature comprised between 350°C and 650°C, preferably around 550°C, for example at a pressure of around 30barA.

According to one aspect of the invention, the secondary catalyst comprises nickel as a catalytically active material, in particular as a catalytically active material on a carrier, for example an aluminum oxide (Al2O3) carrier.

According to one aspect of the invention, the secondary catalyst comprises above 20 to above 45 wt% of nickel, preferably above 35 wt% of nickel and/or a precious metal as a catalytically active material, such as ruthenium, preferably above 1,5 wt% of ruthenium.

In one aspect of the invention, the apparatus comprises a feedstock conduit arranged to feed the secondary reactor with the ammonia feedstock.

In one aspect of the invention, said thermal conductive layer is configured for heat transfers to the secondary catalytic endothermic conversion.

In one aspect of the invention, the heating device comprises a firing chamber configured for the combustion of a fuel gas stream.

In one aspect of the invention, the heating device comprises an electrical heating device.

In one aspect of the invention, the thermal conductive layer is arranged to recover part of the heat from the cracked gas product stream in the cracked gas conduit, in particular from the cracked gas product stream discharged from the main reactor.

In one aspect of the invention, the cracked gas conduit comprise a cracked gas circulation section arranged in a heat exchange relationship with the gas reaction section. In particular, the gas reaction section is delimited from the cracked gas circulation section by the thermal conductive layer. In other words, the thermal conductive layer is arranged for heat exchanges between the ammonia feedstock stream and the cracked gas product from the main catalytic endothermic conversion.

In particular, the cracked gas circulation section comprises a circulation tube or a circulation tube bundle arranged for the circulation of the cracked gas product.

In particular, the gas reaction section comprises a shell, the shell being filled with the secondary catalyst, the at least circulation tube or circulation tube bundle extending inside the shell.

According to one aspect of the invention, the gas reaction section comprises a circulation tube filled with the secondary catalyst or a circulation tube bundle filled with the secondary catalyst and the cracked gas circulation section comprises a cracked gas circulation shell through which said circulation tube or circulation tube bundle is extending.

In one embodiment, the cracked gas circulation section is arranged downstream of the heat exchange section on the cracked gas conduit.

In one aspect of the invention, the catalyst layer and/or the secondary catalyst is chosen among a pellet catalyst of a structured catalyst.

Further features, details and advantages of the invention will become more clearly apparent from reading the description given below by way of indication with reference to the drawings, in which:

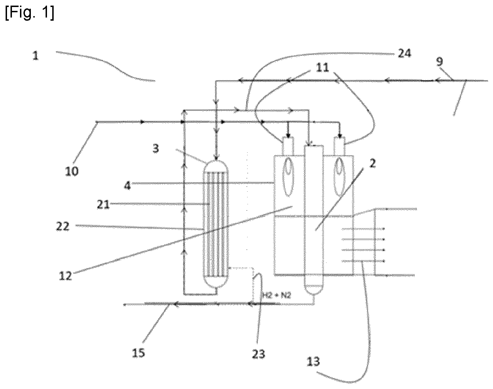

[FIG. 1] is a schematic representation of the apparatus of the invention according to one embodiment,
[FIG. 2] is a schematic representation of a main reactor of the invention according to a first embodiment,
[FIG. 3] is a schematic representation of a main reactor of the invention according to a second embodiment.

It should first of all be noted that the figures disclose the invention in a detailed manner so as to implement the invention, and said figures may of course serve to define the invention more clearly, where necessary.

A process for producing a cracked gas product comprising hydrogen from an endothermic cracking reaction of an ammonia feedstock stream of the invention comprises the following steps:
- Providing an ammonia feedstock stream,
- Heating a main reactor in a heating step with a combustion reaction of a fuel gas stream into a combustion reaction effluent gas stream, said combustion being performed in a firing chamber,
- In the heated main reactor, converting a partially converted ammonia stream into said cracked gas product by a main catalytic endothermic conversion of a partially converted ammonia stream,
- Recovering heat from said cracked gas product in a heating recovery step,
- Redirecting the recovered heat to a secondary reactor in which a secondary catalytic endothermic conversion of the ammonia feedstock stream is performed,
- Transferring the redirected heat to the secondary catalytic endothermic conversion through a thermal conductive layer at least partly delimiting a gas reaction section, in a heat transfer step.

The secondary catalytic conversion is a pre-cracking reaction. In this case, the secondary catalytic conversion is upstream the main catalytic conversion in the ammonia feedstock stream flow direction, and the ammonia feedstock stream is converted by the secondary catalytic conversion into the partially converted ammonia stream, said partially converted ammonia stream being then converted by the main catalytic endothermic conversion into the cracked gas product.

The secondary catalytic conversion is here performed at a temperature comprised between 350°C and 650°C, preferably around 550°C and the main catalytic conversion is performed at a temperature comprised between 600°C and 900°C, preferably between 700°C and 800°C for example at a pressure of around 30barA. The lower temperature of the secondary catalytic conversion allows to use a different catalyst than the catalyst layer of the main catalytic conversion, and thus to improve the field of the cracking reaction.

The conversion rate of the secondary catalytic conversion is comprised between 15% and 90%, preferably between 15% and 50%, preferably between 15% and 20%. The conversion rate of the main catalytic conversion is around 93%.

The main catalytic conversion is performed in presence of an active catalyst layer which promotes the conversion of the partially converted ammonia stream during the cracking reaction when heat is provided to said catalytic conversion. The catalyst layer comprises nickel as a catalytically active material, in particular as a catalytically active material on a carrier, for example aluminum oxide (Al2O3). The catalyst layer comprises from 5 to 20 wt% of nickel, preferably around 15wt% of nickel.

The secondary catalytic conversion is performed in presence of a secondary catalyst which promotes the conversion of the ammonia feedstock stream during the pre-cracking reaction into a partially converted ammonia stream. The secondary catalytic conversion is performed in the secondary reactor in presence of a secondary catalyst comprising nickel as a catalytically active material, in particular as a catalytically active material on a carrier, for example aluminum oxide (Al2O3). The secondary catalyst comprises above 20 to above 45 wt% of nickel, preferably above 35 wt% of nickel and/or a precious metal, such as a ruthenium, preferably above 1,5 wt% of ruthenium. The use of precious metal is facilitated because the feedstock comprises mainly of ammonia with impurity level under ppm.

The secondary catalytic conversion is performed in a secondary reactor, here a cracked gas heated secondary reactor, a cracked gas conduit 23 being configured to discharge the cracked gas product from the main reactor and to distribute said cracked gas product around the cracked gas heated secondary reactor for recovering and directing heat from said cracked gas conduit 23 to the secondary catalytic conversion.

Following the main catalytic conversion, the cracked gas product comprises hydrogen, nitrogen and a portion of unconverted ammonia feedstock. The cracked gas product is hot due to the heat provided to the catalytic reaction. The process comprises here a step of recovering heat from the cracked gas product and a directing step of the recovered heat from the cracked gas product to the secondary catalytic conversion in the secondary reactor called cracked gas heated secondary reactor. During this step, the cracked gas product circulates in the cracked gas heated secondary reactor and exchanges heat with the ammonia feedstock stream which also circulates in said cracked gas heated secondary reactor. For example, the cracked gas product circulates in a first section of a heat exchanger, the ammonia feedstock stream circulates in another section of said heat exchanger, said first and second sections being separated by a thermal conductive layer allowing heat exchanges between the two fluids.

The process of the invention here comprises a secondary reaction that is performed in the cracked gas heated secondary reactor comprising a heat exchanger for exchanging heat between the cracked gas product and the ammonia feedstock stream, and a secondary reaction that is performed in the cracked gas heated secondary reactor.

The process can also comprise a controlling step of the fuel gas stream rate depending on the feedstock stream flow rate. When the ammonia feedstock stream flow rate decreases, the fuel gas stream flow rate decreases too. Thus, the flow rates are controlled to obtain the desired temperature in the main and secondary catalytic conversion and thus the desired cracked gas product rate.

The process comprises also a step of conditioning the ammonia feedstock stream, for example a vaporization step of the ammonia feedstock stream.

The process comprises a step of discharging the cracked gas product. The cracked gas product after being discharged from the main reactor can be treated in a processing step if needed. For example, this processing step can be a purification step. This purification step uses classical purification methods, such as PSA, cryogenic separation, membranes, TSA. Purified hydrogen is thus obtained.

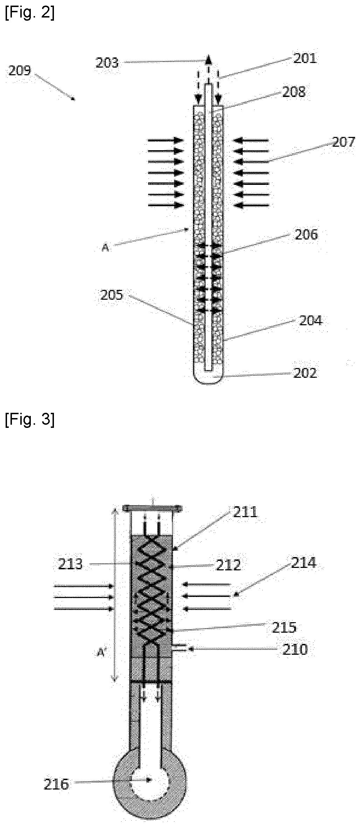

Figure 2 is a schematic representation of an apparatus according to one embodiment.

In this embodiment, the apparatus 1 for producing cracked gas product comprising hydrogen by an endothermic cracking reaction of an ammonia feedstock stream, said apparatus comprising:
- At least one main reactor 2 arranged for producing cracked gas product comprising hydrogen by a main endothermic catalytic conversion of a partially converted ammonia stream,
- A heating device, here a firing chamber 4, arranged to provide heat to the main reactor 2,
- A cracked gas conduit 23 arranged to discharge the cracked gas stream from the main reactor,
- A secondary reactor 3 comprising a gas reaction section 21, arranged for producing a partially converted ammonia stream by a secondary endothermic catalytic conversion of the ammonia feedstock stream, said gas reaction section 21, being at least partially delimited by a thermal conductive layer 22 arranged to recover part of the heat from the cracked gas product in the cracked gas conduit 23, and provide the recovered heat to the secondary catalytic conversion, said gas reaction section 21 comprising a secondary catalyst configured to promote the secondary catalytic conversion of the ammonia feedstock stream.

The main reactor for example is extending through said firing chamber configured for the combustion of a fuel gas stream. There can be a plurality of said main reactor extending through said firing chamber.

In this embodiment, the secondary reactor 3 is arranged upstream the main reactor 2 in the ammonia feedstock stream flow direction. The apparatus 1 comprises an ammonia feedstock stream inlet 9 arranged for the inlet of the ammonia feedstock stream. The apparatus 1 comprises a partially converted ammonia duct arranged to distribute the partially converted ammonia stream from the secondary catalytic conversion (a pre-cracking reaction), performed in the secondary reactor 3 to the main reactor 2.

The cracked gas heated secondary reactor 3 comprises a heat exchanger arranged for heat exchanges between the cracked gas product from the main catalytic conversion and the feedstock gas stream circulating inside the secondary reactor 3. The heat from the cracked gas product is transferred to the secondary reactor. For example, the heat exchanger of the cracked gas secondary reactor 3 can be a fluid/fluid heat exchanger. In this case, the heat exchanger comprises a section configured for the circulation of the ammonia feedstock stream, the heat exchanger comprises another section configured for the circulation of the cracked gas product from the main catalytic conversion, said sections being separated by a thermal conductive layer arranged for the heat exchanges between the ammonia feedstock stream and the cracked gas product from the main catalytic conversion. The heat exchanger can be for example a tube and shell heat exchanger. The heat exchanger comprises a circulation tube bundle comprised in the cracked gas conduit 23 and arranged for the circulation of the cracked gas product, and a shell forming a duct for the circulation of the ammonia feedstock stream, shell through which the circulation tube bundle is extending.

The apparatus comprises a firing chamber 2, said firing chamber comprising a combustion zone 12 in which a combustion of the fuel gas stream into a combustion reaction flue gas is performed. A fuel gas inlet 10 is configured for the inlet of the fuel gas in the firing chamber 2.

The apparatus comprises a partially converted ammonia stream conduits 24 arranged to discharge the partially converted ammonia stream from the secondary reactor and feed the main reactor with the discharged partially converted ammonia stream.

The secondary reactors 3 comprises a feed distribution header and a partially converted ammonia stream collection header.

The main reactor 2 comprises a catalyst layer configured to promote the catalytic conversion of the partially converted ammonia stream at a temperature comprised between 350°C and 650°C, preferably around 550°C.

The secondary reactor 3, is filled with a secondary catalyst comprising nickel as a catalytically active material, in particular as a catalytically active material on a carrier, for example aluminum oxide (Al2O3). The secondary catalyst comprises above 20 to above 45 wt% of nickel, preferably above 35 wt% of nickel and/or a precious metal, such as a ruthenium, preferably above 1,5 wt% of ruthenium, as a catalytically active material, in particular as a catalytically active material on a carrier.

Figure 3 is a schematic representation of the main reactor according to a first embodiment.

In this embodiment, the reactor 209 comprises an outer shell tube 204, said outer shell tube 204 being pressurized. The outer shell tube 204 comprises a reaction chamber A in which a catalytic conversion of the ammonia feedstock stream is realized, said catalytic conversion being a cracking reaction.

The reaction chamber A comprises a layer of an active solid catalyst 205, here a dumped bed of an active catalyst, said catalyst being configured to promote the catalytic conversion of ammonia into a cracked gas product comprising hydrogen, here a cracking reaction, at a temperature comprised between 600°C and 900°C, preferably between 700°C and 800°C at a pressure of around 25 barA. The catalyst layer is for example a catalyst comprising nickel. The partially converted ammonia stream circulates in the active catalyst layer 205 where the cracking reaction occurs. This reaction is possible at a high temperature and heat 207, 206 is provided to the reaction chamber A.

The outer shell tube 204, and more precisely the reaction chamber A, comprises here a heat exchange tube 208, said heat exchange tube 208 being part of the cracked gas conduit 23 and arranged inside the reaction chamber A so as to be in a heat exchange relationship with the catalyst layer 205 and the partially converted ammonia stream. In this embodiment, the heat exchange tube 208 is a single heat exchange tube, made of a thermal conductive material, such as a metal alloy, for example alloy 600. In another embodiment not shown here, the heat exchanger comprises at least two tubes made of said thermal conductive material. The reactor 209 is configured to, after entry into the reaction chamber A by the entry 201, make the partially converted ammonia stream flow through the catalyst layer 205 for the cracking reaction of at least part of the feedstock stream into said cracked gas product in the catalyst layer 205, and then make the cracked gas product flow through the heat exchange tube 208, said heat exchange tube 208 being arranged inside the reaction chamber A.

The catalyst layer 205 is configured to be partially heated by an external heat 207 from an external heat source. The external heat source is for example an external firing or electrical heating. The partially converted ammonia stream is thus converted into said cracked product comprising hydrogen. The partially converted ammonia stream is heated and said heat is provided to the cracking reaction. Then, the cracked gas is further heated. When the hot gas cracked product flows through the cracked gas heat exchange tube 208, it transfers internally its heat 206 to the catalyst layer 205. Hence, the catalyst layer is heated by an external heat source 207, and by an internal heat source 206. The consumption of external heat 207 is thus reduced. In a preferred embodiment, the cracked gas product flows through the heat exchange tube 208 in a countercurrent manner.

The shell tube comprises an outlet for the cracked gas product 203 arranged to release the cracked gas product from the main reactor.

Figure 4 is a schematic representation of the main reactor for producing a according to a second embodiment.

As in the embodiment of figure 3, the outer shell tube comprises a partially converted ammonia stream tube entry 210, the tube entry 210 being configured to let the ammonia feedstock stream enter in the outer shell tube 204, and more precisely in a reaction chamber A'.

In this embodiment, the reactor 214 comprises an outer shell tube 211 comprising the reaction chamber A', said reaction chamber being configured to be heated. The reactor comprises an active catalyst layer 212 arranged in the reaction chamber A'. The catalyst layer 212 is arranged to promote a cracking reaction of the partially converted ammonia stream into said cracked gas product. The partially converted ammonia stream circulates in the catalyst layer 212 which promotes the cracking reaction at a temperature comprised between 600°C and 900°C at a pressure of 25 barA. The catalyst layer comprises here nickel as a catalytically active material.

The reactor 214 comprises two heat exchange tubes 213, said heat exchange tubes being part of the cracked gas conduit 23 and arranged for performing heat exchanges between the cracked gas product and the cracking reaction in the reaction chamber A'. Here, the heat exchange tubes 213 have a coiled shape, the coils being interlaced.

As in figure 3, the catalyst layer 212 is configured to be partially heated by an external heat 214 from an external heat source. The external heat source is for example an external firing or electrical heating. The partially converted ammonia stream is thus converted into said cracked gas product comprising hydrogen. The partially converted ammonia stream is heated and said heat is provided to the cracking reaction. Then, the cracked gas is further heated. When the hot cracked gas product flows through the cracked gas product circulation duct of the heat exchanger 213, it transfers internally its heat 215 to the catalyst layer 212. Hence, the catalyst layer is heated by an external heat source 214, and by an internal heat source 215. The consumption of external heat 215 is thus reduced. In a preferred embodiment, the cracked gas product flows through the heat exchange tubes 213 in a countercurrent manner.

## Claims

1. A process for producing a cracked gas product comprising hydrogen from an endothermic cracking reaction of an ammonia feedstock stream, said process comprising the following steps:
- providing an ammonia feedstock stream,
- heating a main reactor in a heating step,
- in the heated main reactor, converting a partially converted ammonia stream into the cracked gas product by a main catalytic endothermic conversion of said partially converted ammonia stream,
- recovering heat from said cracked gas product flowing in a cracked gas conduit (23) in a heat recovery step,
- redirecting the heat recovered in said heat recovery step to at least one secondary reactor in a heat redirection step, the secondary reactor comprising a gas reaction section in which a secondary catalytic endothermic conversion of the ammonia feedstock stream into the partially converted ammonia stream is performed,
- transferring the redirected heat to the secondary catalytic endothermic conversion through a thermal conductive layer at least partly delimiting the gas reaction section, in a heat transfer step
the process comprising :
- performing a heat exchanges step by performing heat exchanges between the cracked gas product and the main catalytic endothermic conversion, said heat exchanges step comprising the following steps:
- discharging the cracked gas product in said cracked gas conduit (23), said cracked gas conduit (23) being arranged for the heat exchanges between the discharged cracked gas product and the main catalytic endothermic conversion,
- recovering heat from the discharged cracked gas product,
- directing the recovered heat to the main catalytic endothermic conversion.

2. A process according to claim 1, wherein the secondary catalytic conversion is upstream the main catalytic conversion in the ammonia feedstock stream flow direction, the ammonia feedstock stream being converted by the secondary catalytic endothermic conversion into the partially converted ammonia stream, and the partially converted ammonia stream is converted by the main catalytic endothermic conversion into the cracked gas product.

3. A process according to one of the preceding claims, comprising a pre-heating step of the partially converted ammonia stream upstream of the main catalytic conversion.

4. An apparatus (1) for producing cracked gas product comprising hydrogen by an endothermic cracking reaction of an ammonia feedstock stream, said apparatus comprising:
- at least one main reactor (2) arranged for producing said cracked gas product comprising hydrogen by a main endothermic catalytic conversion of a partially converted ammonia stream,
- a cracked gas conduit (23) arranged to discharge said cracked gas product from the main reactor (2),
- a secondary reactor (3) comprising a gas reaction section (21), said gas reaction section (21) comprising a secondary catalyst configured to promote a secondary catalytic conversion of the ammonia feedstock stream into the partially converted ammonia stream, said gas reaction section (21) being at least partially delimited by a thermal conductive layer (22) arranged to recover part of the heat from the cracked gas product in the cracked gas conduit (23), and provide the recovered heat to the secondary catalyst
the main reactor comprising:
- an outer shell tube (211), comprising a reaction chamber (A, A'), said reaction chamber (A, A') being configured to be heated,
- a catalyst layer (205, 212) arranged in the reaction chamber for performing the main endothermic catalytic conversion,
- an entry for the partially converted ammonia feedstock stream arranged in the reaction chamber (A, A'), the entry for the ammonia feedstock stream being in fluid connection with the catalyst layer (205, 212),
apparatus wherein the cracked gas conduit (23) is arranged in heat exchange relationship with the reaction chamber (A, A').

5. An apparatus (1) according to claim 4, wherein the secondary reactor (3) is arranged upstream the main reactor (2) in the ammonia feedstock stream flow direction.

6. An apparatus (1) according to any of claims 4 and 5, wherein the apparatus comprises a partially converted ammonia conduit (24a, 24b) arranged to discharge the partially converted ammonia stream from the secondary reactor (3) and feed the main reactor with the discharged partially converted ammonia stream.

7. An apparatus (1) according to any of claims 4 to 6, wherein a portion of the cracked gas conduit (23) is extending inside the reaction chamber (A, A').

8. An apparatus (1) according to of the preceding claim, configured to make said partially converted ammonia stream flow through the catalyst layer (205, 212) in countercurrent to the flow of the cracked gas product through said portion of the cracked gas conduit (23) extending inside the reaction chamber (A, A').

9. An apparatus (1) according to any of claims 4 to 8, wherein the cracked gas conduit (23) comprises a heat exchange section arranged in a heat exchange relationship with the reaction chamber (A, A').

10. An apparatus (1) according to the preceding claim, wherein said heat exchange section comprises at least one heat exchange tube (208, 213) arranged for the circulation of the cracked gas product and heat exchanges between the cracked gas product and the reaction chamber (A, A').

11. An apparatus (1) according to the preceding claim, wherein said at least one heat exchange tube (208, 213) has a coiled shape.

12. An apparatus (1) according to claim 10 or claim 11, wherein said heat exchange section comprises at least two heat exchange tubes (213) and wherein each of said at least two heat exchange tubes (213) has a coiled shape, said at least two heat exchange tubes (213) being interlaced.

13. An apparatus (1) according to any of claims 4 to 12, wherein the cracked gas conduit (23) comprise a cracked gas circulation section arranged in a heat exchange relationship with the gas reaction section.

14. An apparatus (1) according to the preceding claim, wherein the gas reaction section (21) comprises a circulation tube bundle filled with the secondary catalyst and the cracked gas circulation section comprises a cracked gas circulation shell through which said circulation tube bundle is extending.
